# EUROPEAN PATENT APPLICATION

(11) **EP 1 254 877 A1**
(43) Date of publication of application: **06.11.2002**
(21) Application number: 00989070.8
(22) Date of filing: 29.12.2000
(51) Int. Cl.: C05G 1/06, C05C 1/02

(54) **METHOD FOR PRODUCING NITROGENOUS-POTASH FERTILISER**

(30) Priority: 14.01.2000 RU 2000100620
(71) Applicant: Dukhanin, Vladimir Fedorovich, Nevinnomyssk, 357030 (RU); Serebryakov, Alexandr Ivanovich, Moskovskaya obl. 143031 (RU)
(72) Inventor: Dukhanin, Vladimir Fedorovich, Nevinnomyssk, 357030 (RU); Serebryakov, Alexandr Ivanovich, Moskovskaya obl. 143031 (RU)
(74) Representative: Kador & Partner
(86) International application number: RU0000541
(87) International publication number: WO01051431

(57) **Abstract**

The invention relates to methods for producing nitrogenous-potash granulated fertilizers. The inventive method consists in the following: potassium chloride is mixed with ammonium nitrate, the mixture is granulated in a granulating drum. For mixing ammonium nitrate is taken in the form of a fusion cake and 0.5-3.2 mass % of magnesium sulphate is added to the mixture. 37-60 mass % of chloride potash is chosen for mixture. A mass ratio of nitrogen in the mixture upstream from the granulating drum and in the final product is maintained in the range of 1.005 to 1.05. The nitrogenous-potash fertilizer produced in this way comprises (mass %): N 12-25, K₂O 16.6-40.

## Description

### Pertinent art

The invention relates to methods for producing nitrogenous-potash granulated fertilizers based on ammonium nitrate and potassium chloride and can be used in chemical industry.

### State of art

There is a known method for producing two-layer granules in a fluidized bed. In this case sodium chloride solution is sprayed on the surface of ammonium nitrate at a fluidized bed temperature of 80-82 °C and at a concentration of NaCl in the solution of 24 - 26 mass % (SU 352861, C 05 C 1/02, 1972). The disadvantage of this method is low finished product output.

There is a known method for producing nitrogenous-potash fertilizer, wherein finely ground potassium chloride is added to the concentrated solution or fusion cake of ammonium nitrate followed by granulation of the fusion cake in granulation towers. The obtained nitrogenous-potash fertilizer contains N 16 - 16.5 mass % and K₂0 25 mass % (Pozin M.E., Technology of mineral salts (fertilizers, pesticides, industrial salts, oxides and acids), p. II, edition 4, L., "Chemistry", 1974, p. 1208-1209).

The disadvantage of this method is its reduced operating reliability since it requires using finely ground potassium chloride only, whereas using potassium chloride particles of standard size results in frequent clogging of granulating drums, with consequent drop in the method output.

The most similar to this invention by technical essence and by the accomplished effect is the method of producing nitrogenous-potash fertilizer, which comprises mixing of ammonium nitrate with potassium chloride, granulation of the mixture in a granulating and drying drum (FR 1476296, C 05 D 1/02, 1966). Ammonium nitrate and potassium chloride content of the mixture is 10-50 mass % and 50-90 mass %, respectively.

The main disadvantage of the closest counterpart method is its reduced operating reliability (see definition of the term "operating reliability" by GOST and its characteristics in the notes to Table represented at the end of this description) caused by the increased number of failures of the plant, wherein the proposed method is realized.

### Disclosure of the invention

The main technical problem to be solved by this invention consists in the improvement of the method operating reliability through cutting down the time of delays due to failures of the equipment wherein this method is realized. This provides better output of the method.

The problem is solved by the method of producing a nitrogenous-potash fertilizer, which comprises mixing of ammonium nitrate with potassium chloride and granulation of the mixture in the granulating drum. In mixing the ammonium nitrate is taken in the form of a fusion cake, and 0.5 - 3.2 mass % of magnesium sulphate is added to the mixture, and 37 - 60 mass % of potassium chloride is chosen for mixture.

Furthermore, the nitrogenous-potash fertilizer produced by this method contains (mass %):
N 12-25
K₂O 16.6-40

The main distinctive features of the method lie in the fact that for mixing the ammonium nitrate is taken in the form of a fusion cake, 0.5-3.2 mass % of magnesium sulphate is added to the pulp mixture, 37-60 mass % of potassium chloride is chosen for the mixture.

The method of the present invention makes it possible to produce the fertilizer of the following composition: N 12 - 25 mass %, K₂O 40-16.6 mass %.

This invention satisfies the condition for patentability as to novelty since the attempts to find in the prior art an engineering solution whose essential features are in complete coincidence with all the features contained in the independent claim of this invention have failed. This invention satisfies the condition for patentability as to an inventive level since the prior art does not contain a description of an engineering solution whose features are aimed at the solution of the technical problem, which is to be accomplished by this invention.

### The embodiment of the method

The following example explains an essence of the present invention.

85-92 mass % of ammonium nitrate in the form of a fusion cake at 11-22 t/h, potassium nitrate powder at 8 - 18.4 t/h and magnesium sulfate at 0.145-0.87 t/h are fed into the blender at a temperature of 100 -130 °C. The magnesium sulfate concentration of the pulped mixture is 0.5 to 3.2 mass %. The pulp is fed for granulation into the granulating and drying drum, which has a diameter of 4.5 m and a length of 30 m. A rotational speed of the granulating drum is 4.2 rev/min. The mass ratio of nitrogen in the mixture upstream of the granulating drum and in the final product is maintained within the range of 1.005 to 1.05. At the granulating drum outlet the granulated product contains (mass %): N 12-25, K₂O 16.6-40. Magnesium sulfate concentration (mass %) of the finished product in terms of MgO is 0.17-1.1. At the granulating drum outlet the finished product has the following size composition: no less than 90% of 1-4 mm size fraction, up to 3% of less than I mm size fraction, the size fraction of more than 6 mm is absent. The average finished product output per hour is 27 t/h.

The operating characteristics of the proposed method and those of the closest counterpart method are represented in Table.

**Table**

| Operating characteristics | Method | |
|---|---|---|
| | Proposed | Counterpart |
| Mean time between failures, h | 620 | 330-370 |
| The number of failures per year | 16 | 24-28 |
| Mean time to restore, h | 18 | 30-32 |

| Total time of | | |
|---|---|---|
| - delays due to failures, h/year | 200 | 550-690 |
| - in-service time, h/year | 7900 | 7650-7400 |
| Average hourly output, t/h | 27 | 23.1 |
| Note. In accordance with GOST 27002-89 "Reliability in engineering. Terms and definitions", reliability is the ability of an object (in our case the ability of the method) to maintain the values of all parameters within the prescribed limits in time. Mean time between failures, the number of failures per year and so on can be chosen as criteria for evaluation of reliability of an object. A failure is an event, which consists in disturbance of the operable condition of an object. Mean time between failures is a time of object operation until its failure occurs. | | |

It should be noted that, when potassium chloride KC1 and magnesium sulfate MgSO₄ concentrations are beyond the range specified in the first claim of the invention, the operating characteristics of the method reliability are essentially impaired. It follows from the experimental studies carried out by the authors that, with upper limits of KCl and MgSO₄ concentrations being exceeded, the method reliability reduces due to poor granulation process: a so-called "smearing" fertilizer is obtained, its sticking to the drum walls takes place and clogging of the nozzles feeding the pulp into the drum occurs frequently. Hence the plant has to be stopped for cleaning more frequently. When the concentration of MgSO₄ falls below the lower limit, the granulation process is also impaired. It is known that non-aqueous MgSO₄ binds the water present in the freshly produced granules at the drum outlet section, thus insufficient amount of non-aqueous MgSO₄ binds insufficient amount of water in these granules, so from the standpoint of stoppage rate the operation of drum outlet section is worsened. When KCl concentration falls below the lower limit, an off-grade fertilizer is produced. It has reduced potassium content, namely, in terms of K₂O below the required limit of 16.6 mass %. When the mass ratio of nitrogen in the pulp upstream of the drum and in the finished product is maintained within the specified range the method reliability increases owing to the fact that this provides more effective mixing in the drum and, hence, homogenization of the product. When this ratio goes beyond the lower and upper limits, an off-grade fertilizer is produced as to its required composition: N 12-25 mass %. In particular, when this ratio is below the lower limit, N content of the fertilizer will be less than 12 mass % due to thermal decomposition of ammonium nitrate in the inlet section of the drum.

As it follows from the Table, the proposed method makes it possible to increase the mean time between failures 1.77 times, to reduce the number of failures 1.63 times, to shorten the mean time to restore 1.72 times. As a result, the total time of delays due to failures decreases 2.8 times. The average hourly output of the process increases 1.17 times.

### Industrial applicability

The invention can be used most efficiently in chemical industry for producing granulated nitrogenous-potash fertilizers.

## Claims

1. A method for producing nitrogenous-potash fertilizer, which comprises the mixing of ammonium nitrate with potassium chloride and granulation of the obtained mixture in the granulating drum, differing in that for mixing ammonium nitrate is taken in the form of a fusion cake, 0.5 - 3.2 mass % of magnesium sulfate is added to the mixture, and 37-60 mass % of potassium chloride is chosen for mixture.

2. The method as claimed in claim 1 differing in that a mass ratio of nitrogen in the mixture upstream of the granulating drum and in the finished product is maintained within the range of 1.005 to 1.05.

3. A nitrogenous-potash fertilizer produced by the method as claimed in claim 1.

4. The nitrogenous-potash fertilizer as claimed in claim 2 containing (mass %):
N 12-25
K₂O 16.6-40
